Europäisches Patentamt

European Patent Office

Office européen des brevets

(19)

(11) Publication number: **0 284 783**
B1

# (12)  EUROPEAN PATENT SPECIFICATION

(45) Date of publication of the patent specification:
31.10.90

(51) Int. Cl.⁵: **B61F 5/02,** B61F 5/08, B61F 5/14

(21) Application number: 88102860.9

(22) Date of filing: 26.02.88

(54)  Element for supporting the suspensionsprings of railway wagons and suchlike.

(30) Priority: 31.03.87 IT 1990687

(43) Date of publication of application:
05.10.88 Bulletin 88/40

(45) Publication of the grant of the patent:
31.10.90 Bulletin 90/44

(84) Designated Contracting States:
DE FR GB

(56) References cited:
DE-A- 1 605 056
DE-C- 923 850
DE-U- 8 535 955
FR-A- 957 723
US-A- 4 562 775

(73) Proprietor: PIRELLI SISTEMI ANTIVIBRANTI S.P.A.,
Piazzale Cadorna, 5, I-20123 Milan(IT)

(72) Inventor: Morini, Emilio, Via Teodosio 57,
I-20131 Milan(IT)

(74) Representative: Giannesi, Pier Giovanni et al, Pirelli
S.p.A. Direzione Brevetti Piazzale Cadorna, 5,
I-20123 Milano(IT)

## Description

The present invention relates to an element for supporting the suspension-springs of railway waggons and suchlike.

More in particular, the supporting element in reference is of the type comprising a bottom plate for the connecting of the supporting element to a railway waggon, a supporting plate parallelly extending to the bottom plate, a positioning collar perpendicularly extending from the supporting plate on the opposite side of the bottom plate, an intermediate plate parallelly interposed between the bottom plate and the supporting plate, a first ring in elastomeric material coaxially disposed in respect to the positioning collar and interposed between the bottom and the intermediate plate, being said collar connected to them in correspondence with the relative surfaces reciprocally in contact, and a second ring in elastomeric material coaxially disposed in respect to the positioning collar and interposed between the intermediate plate and the supporting plate, to which it is connected in correspondence of the respective reciprocally contacting surfaces.

As known, the railway waggons are essentially composed by two or more trucks, upwardly to which a structure is disposed, named in the sector "Box", on which passengers or goods are housed and to whose transport the waggon is assigned.

Generally, the box is foreseen to be elastically suspended in respect to the trucks through interposition between the box and the same trucks, of a plurality of metallic, helicoidal springs vertically disposed.

These springs are subjected to deformations in an anomalous way during the execution of curves by the same waggon, particularly when they are disposed in lateral sides of the waggon.

In fact, in this situation, the following movements are occurring:
- rotation of the trucks in respect to the box according to a vertical axis;
- lateral shifting and inclination of the box in respect to the trucks due to the centrifugal force.

The springs are therefore obliged to follow the relevant movements between the corresponding trucks and the box curving according to their longitudinal axis.

To confine the anomalous deformations to which the springs are subjected, is foreseen that each of them is engaged with the truck and with the box by interposition of suitable supporting element which are elastically deformable.

A first type of supporting element rather known comprises, essentially, a bottom plate which is connected to the truck or to the waggon box, a supporting plate, parallelly to the bottom plate, on which acts one end of the spring and a rubber elastic ring interposed between the bottom plate and the supporting plate and rigidly connected to the same by the rubber-metal union.

From the supporting plate is also extending, from a central position and towards the opposite direction to the bottom plate, a positioning collar destined to be inserted at the end of the spring in order to inhibit shiftings of the latter in respect to the same supporting plate.

During the execution of curves by the waggon, the rubber ring is elastically deformed both due to the tangential forces and to the couples transmitted by the spring to the supporting element; thus said spring tends to deforming in the above specified manner.

The rubber rings deformations corresponding to the supporting elements respectively associated to the opposed ends of each spring make the supporting plate of the same elements tending, within certain limits, to be oriented in order to reciprocally align the axes of the relevant positioning tangs.

By this way the anomalous deformations of the spring are considerably reduced.

In spite of that, the supporting elements of this type present a satisfactory behaviour only when they are associated to springs positioned near the longitudinal axis of the waggon, and therefore subjected to deformations relatively confined during the execution of the curves.

Viceversa, these supporting elements have demonstrated not to be capable to sufficiently reduce the anoumalous deformations of the springs when these are positioned near the extreme sides of the waggon.

In order to put a remedy to these limitations, supporting elements have been realized, conceptually similar, to those of the type previously described, but provided with two elastic rings having the same dimensions and rigidity, reciprocally separated by an intermediate plate parallelly extending to the above mentioned plates in a median position between the same (see for instance the DE-A 1 605 056 describing a supporting element of this type).

The elastic rings are interposed one between the bottom and the intermediate plate and the other between the intermediate and the supporting plate, and are rigidly connected to the same by a rubber-metal union.

The presence of two elastic rings instead of one, confers to these supporting elements a greater functionality in comparison with those of the type previously described.

Neverthless, also the supporting elements provided with two elastic rings are not capable to sufficiently reduce the anomalous deformations of the springs.

This is also due to the fact that the planning requirements of the suspensions of which the springs in reference make part, do not permit to realize the elastic rings with a material having a smaller rigidity to that of predetermined values.

Under such values, in fact, the deformations of rings, due to compression and shear stress would negatively affect the whole behaviour of the suspension.

The aim of the present invention is that of resolving the above mentioned draw-back, realizing a supporting element that, in spite of presenting a rigidity both for compression and for shearing sufficiently high, is capable to satisfactory reduce the anomalous deformations of the springs also when the same springs are positioned at the extreme sides of the railway waggon.

This purpose and others which will be still better understood from the following detailed descriptions will be achieved by an element for supporting the suspesions-springs of railway waggons and suchlike, which is characterized by the fact that the second ring in elastomeric material presents a smaller height to that of the first ring in elastomeric material.

According to an embodiment variation of the invention, the same purposes are achieved by a supporting element of the above mentioned type characterized by the fact that the second ring is realized with material more rigid than that constituting the first one.

Further characteristics and advantages will be better understood from the following detailed description of a preferred but not exclusive execution of an element for supporting the suspension-springs of railway waggons and suchlike, according to the present invention, described therein, with reference to the enclosed drawings, given only for indicative and not limitative aim, in which:

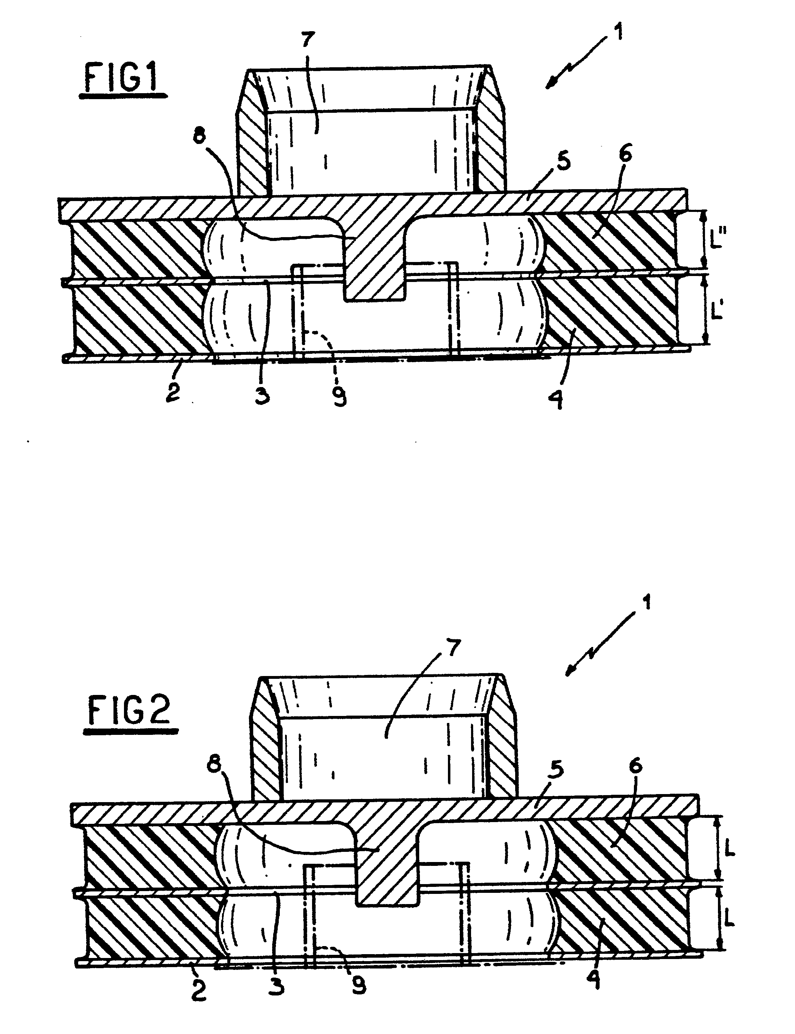

. figure 1 is a diametral section of a supporting element according to the invention;

. figure 2 is a diametral section of a supporting element according to an embodiment variation of the invention.

With reference to figure 1, by 1 has been indicated an element for supporting the suspensions-springs of railway waggons and suchlike, according to the present invention.

The supporting element 1 comprises an annular bottom plate 2, parallelly to that is extending, to a pre-determined distance from the same, an intermediate plate 3 that presents, it too, an annular shape and coaxially disposed in respect to the bottom plate 2.

Between the bottom plate 2 and the intermediate plate 3 is coaxially interposed a first ring 4 in elastomeric material, connected to the same plates by a rubber-metal union.

A flat, circular shape supporting plate 5 is coaxially and parallelly disposed in respect to the intermediate plate 3 on the opposite side in respect to bottom plate 2.

Between the supporting plate 5 and the intermediate plate 3 is coaxially disposed a second ring 6 in elastomeric material, which is rigidly connected to the same plates by the rubber-metal union.

According to the invention, advantageously, has been foreseen that the height of the second ring 6, indicated with L", is smaller than the height of the first ring 4, indicated with L'.

More in particular, is preferably foreseen that the maximum values of the ratio between the height L" of the second ring 6 and the height L' of the first ring 4 are comprised from a value of 0,7 up to values smaller than 1,0.

It is also foreseen that the values of the ratio between the height of each ring 4, 6 and the difference between the outer and inner diameters of the same rings are comprised between 0,1 and 0,25.

On the supporting plate 5 is also coaxially fixed, at the opposite side of the bottom plate 2, a positioning collar 7, known and conventional.

In an original way, from the center of the supporting plate 5 is also extending, in the opposite direction to the positioning collar 7, a stopping tang 8 destined to engage with gap in a stopping collar 9, indicated by a sketched line, destined to be rigidly fixed to a side of a railway waggon to which the supporting element 1 is bound.

After describing all the above in a structural way, the functioning of the supporting element, according to the invention, is the following.

The supporting element 1 is destined to be fixed, in correspondence of its bottom plate 2, to a truck or to the box of a railway waggon, not illustrated as already known, and not so important to the end of the present invention and to use, coaxially, by the positioning collar 7, a helicoidal spring extending between the box and the above mentioned truck and acting on the supporting plate 5.

When the railway waggon is running on a rectilineal way, the supporting element 1 must support only compression stresses which are transmitted by the above mentioned spring due to the axial loads acting on the same.

These stresses are contrasted by an elastic deformation of rings 4 and 6 in axial direction.

Thanks to this aspect, the supporting element has exactly the same behaviour of a supporting element of conventional type with the same outer dimensions and material employed.

When the railway waggon is running on a curvilineal route, the supporting element 1 is also subjected to forces tangentially acting in respect to the supporting plate 5, as well as to bending couples due to the non-alignment of the box in respect to the truck.

The combination of the forces as well as the couples then applied on the supporting plate 5 produces a couple that tends to have the same supporting plate rotated in contrast with the actions due to the elastic deformations transmitted to the rings 4 and 6.

The smaller height of the second ring 6 is respect to that of the first one 4 makes the second ring in condition to have, in relation to the tangential stresses and to the applied couples, a greater rigidity than that presented by first ring 4, optimizing the ratio between the transversal flexibility and the flextional flexibility of the element 1 in its complex.

This fact determines, in comparison with the supporting element of known type wherein the rings presented equal heights, a shifting of the rotation center of the supporting plate 5 in removal in respect to the positioning collar 7, towards the truck or the box to which the supporting element is fastened.

The shifting of the rotation center of the supporting plate 5 makes, in comparison with the known supporting elements, the same supporting plate, and, therefore, the end of the spring linked to it, rotating according to greater arcs in condition of equal tangential forces and applied couples.

By this way the anomalous deformations transmitted to the spring are more reduced than that was possible by supporting element of known type.

As a matter of fact, the supporting plate 5 corresponding to the supporting element associated to the respective opposed ends of the spring present, always in comparison with the known tecnique, a greater tendency to orientating in order to align the axes of the respective positioning collars 7, reducing the amplitude of the sinusoidal spring deformation.

Advantageously, the presence of tang 8 engaged in the stopping collar 9 forbides that the supporting plate 5 is shifted and/or rotated in respect to the bottom plate 2 over a pre-determined value, beyond it the stresses given to rings 4 and 6 could be excessive.

The invention thus achieves all its objectives.

In fact the supporting element in reference, in spite of having the same behaviour to that of the known supporting element in relation to the compression stresses, presents a better behaviour in connection with the tangential stresses and to the applied couples, being so capable to satisfactorily limit the anomalous deformations of the springs associated to it also when this spring works under particularly heavy conditions.

In figure 2 is shown a possible embodiment variation of the invention that resolves the problems of the known tecnique that is based, on the idea of moving away the rotation center of the supporting plate 5 in respect to the positioning collar 7 and, therefore, to the associated spring.

To that purpose, this embodiment variation foresees that the second ring 6 is composed by a material having a greater rigidity than that of the material constituting the first ring 4.

By this way a greater rigidity of the second ring 6 is got although the height of the latter appears equal to that of the first ring 4, as shown in figure 2 in which said heights are indicated with L.

Obviously, the present invention is subjected to further modifications and variations, without going out from the inventive idea that characterizes the same.

Particularly, the differentiated rigidity of the rings 4 and 6 can be obtained also varying the diametral dimensions of the same rings, as well as suitably combining the different proposed solutions and/or other solutions technically equivalent.

## Claims

1) Element (1) for supporting the suspension-springs of railway waggons and suchlike, including:
- a bottom plate (2) for the fastening of the supporting element to a railway waggon;
- a supporting plate (5) parallelly extending to the bottom plate;
- a positioning collar (7) extending perpendicularly from the supporting plate towards the opposed direction of the bottom plate;
- an intermediate plate (3) parallelly interposed between the bottom plate and the supporting plate;
- a first ring (4) in elastomeric material coaxially disposed in respect to the positioning collar and interposed between the bottom plate and the intermediate plate, to which it is linked in correspondence to the respective surfaces reciprocally in contact;
- a second ring (6) in elastomeric material coaxially disposed in respect to the positioning collar and interposed between the intermediate plate and the supporting plate, to which it is linked in correspondence to the respective surfaces reciprocally in contact, characterized by the fact that said second ring presents a height (L") smaller than that of the first ring (L').

2) Supporting element according to claim 1, characterized by the fact that the ratio between the height of the second ring and the height of the first ring is comprised between a value from 0,7 to values smaller to 1,0.

3) Supporting element according to claim 1, characterized by the fact that the ratio between the height of each first and second ring and the difference between the respective outer and inner diameter is comprised between 0,1 and 0,25.

4) Element (1) for supporting the suspension-springs of railway waggons and suchlike, including:
- a bottom plate (2) for the fastening of the supporting element to a railway waggon;
- a supporting plate (5) parallelly extending to the bottom plate;
- a positioning collar (7) perpendicularly extending from the supporting plate towards the opposed direction of the bottom plate;
- an intermediate plate (3) parallelly interposed between the bottom plate and the supporting plate;
- a first ring (4) in elastomeric material coaxially disposed in respect to the positioning collar, to which it is linked in correspondence to the relative surfaces reciprocally in contact;
- a second ring (6) in elastomeric material coaxially disposed in respect to the positioning collar and interposed between the intermediate plate and the supporting plate, to which it is linked in correspondence to the respective surfaces reciprocally in contact, characterized by the fact that the material constituting the second ring presents a greater hardness than that the material constituting the first ring.

5) Supporting element according to claims 1 and 4, characterized by the fact of comprising also a tang (8) extending from the supporting plate towards the opposed direction to the positioning collar and engaging with gap in a stopping area (9) integral with said waggon.

## Revendications

1. Elément (1) pour supporter les ressorts de suspension de wagons de chemin de fer et analogues, comportant:
- une plaque de fond (2) pour la fixation de l'élément de support à un wagon de chemin de fer;
- une plaque support (5) s'étendant parallèlement à la plaque de fond;
- une bague de positionnement (7) orientée perpendiculairement à partir de la plaque support, en direction opposée à la plaque de fond;

– une plaque intermédiaire (3) interposée parallèlement entre la plaque de fond et la plaque support;

– un premier anneau (4) en élastomère, placé coaxialement à la bague de positionnement entre la plaque de fond et la plaque intermédiaire, auxquelles il est relié par les surfaces correspondantes, mutuellement en contact;

– un second anneau (6) en élastomère, placé coaxialement à la bague de positionnement entre la plaque intermédiaire et la plaque support, auxquelles il est relié par les surfaces correspondantes, mutuellement en contact, caractérisé par le fait que le second anneau présente une hauteur (L″) plus petite que celle du premier anneau (L′).

2. Elément de support selon la revendication 1, caractérisé par le fait que le rapport entre la hauteur du second anneau et la hauteur du premier anneau est compris entre 0,7 et une valeur inférieure à 1,0.

3. Elément de support selon la revendication 1, caractérisé par le fait que le rapport entre la hauteur de chacun des premier et second anneaux et la différence entre leurs diamètres extérieur et intérieur respectifs est compris entre 0,1 et 0,25.

4. Elément (1) pour supporter les ressorts de suspension de wagons de chemin de fer et analogues, comportant:

– une plaque de fond (2) pour la fixation de l'élément de support à un wagon de chemin de fer;

– une plaque support (5) s'étendant parallèlement à la plaque de fond;

– une bague de positionnement (7) orientée perpendiculairement à partir de la plaque support, en direction opposée à la plaque de fond;

– une plaque intermédiaire (3) interposée parallèlement entre la plaque de fond et la plaque support;

– un premier anneau (4) en élastomère, placé coaxialement à la bague de positionnement entre la plaque de fond et la plaque intermédiaire, auxquelles il est relié par les surfaces correspondantes, mutuellement en contact;

– un second anneau (6) en élastomère, placé coaxialement à la bague de positionnement entre la plaque intermédiaire et la plaque support, auxquelles il est relié par les surfaces correspondantes, mutuellement en contact, caractérisé par le fait que le matériau constituant le second anneau présente une plus grande dureté que le matériau constituant le premier anneau.

5. Elément de support selon les revendications 1 et 4, caractérisé par le fait qu'il comprend également une queue (8) s'étendant depuis la plaque support en direction opposée à la bague de positionnement et s'engageant avec jeu dans un élément d'arrêt (9) d'un seul tenant avec le wagon.

**Patentansprüche**

1. Stützelement (1) für die Tragfedern von Eisenbahnwagen und dergleichen, umfassend:

– eine Bodenplatte (2) zum Befestigen des Stützelementes an einem Eisenbahnwagen;

– eine Stützplatte (5), die sich zu der Bodenplatte parallel erstreckt;

– einen Positionierungsbund (7), der sich von der Stützplatte in einer Richtung von der Bodenplatte weg erstreckt;

– eine Zwischenplatte (3), die zwischen der Bodenplatte und der Stützplatte parallel angeordnet ist;

– einen ersten Ring (4) aus elastomerem Material, der zu dem Positionierungsbund gleichachsig und zwischen der Bodenplatte und der Zwischenplatte angeordnet ist, mit denen er an betreffenden Flächen in Verbindung steht;

– einen zweiten Ring (6) aus elastomerem Material, der zu dem Positionierbund gleichachsig und zwischen der Zwischenplatte und der Stützplatte angeordnet ist, mit denen er an den betreffenden Flächen in Verbindung steht, dadurch gekennzeichnet, daß der zweite Ring eine Höhe (L″) hat, die kleiner als die Höhe (L′) des ersten Ringes ist.

2. Stützelement nach Anspruch 1, dadurch gekennzeichnet, daß das Verhältnis zwischen der Höhe des zweiten Ringes und der Höhe des ersten Ringes zwischen einem Wert von 0,7 und Werten kleiner als 1,0 liegt.

3. Stützelement nach Anspruch 1, dadurch gekennzeichnet, daß das Verhältnis zwischen der Höhe des ersten und des zweiten Ringes und der Unterschied zwischen dem betreffenden Außendurchmesser und Innendurchmesser zwischen 0,1 und 0,25 liegt.

4. Stützelement (1) für die Tragfedern von Eisenbahnwagen oder dergleichen, umfassend:

– eine Bodenplatte (2) zum Befestigen des Stützelementes an einem Eisenbahnwagen;

– eine Stützplatte (5), die sich zu der Bodenplatte parallel erstreckt;

– einen Positionierungsbund (7), der sich von der Stützplatte in einer Richtung von der Bodenplatte weg erstreckt;

– eine Zwischenplatte (3), die zwischen der Bodenplatte und der Stützplatte parallel angeordnet ist;

– einen ersten Ring (4) aus elastomerem Material, der zu dem Positionierungsbund gleichachsig und zwischen der Bodenplatte und der Zwischenplatte angeordnet ist, mit denen er an betreffenden Flächen in Verbindung steht;

– einen zweiten Ring (6) aus elastomerem Material, der zu dem Positionierbund gleichachsig und zwischen der Zwischenplatte und der Stützplatte angeordnet ist, mit denen er an den betreffenden Flächen in Verbindung steht, dadurch gekennzeichnet, daß das Material des zweiten Ringes eine größere Härte als das Material des ersten Ringes hat.

5. Stützelement nach den Ansprüchen 1 und 4, dadurch gekennzeichnet, daß es weiterhin eine Zun- ge (8) aufweist, die sich von der Stützplatte entgegengesetzt zur Erstreckungsrichtung des Positionierbundes erstreckt und mit einem Spalt in einer Anschlagfläche (9) im Eingriff steht, die mit dem Wagen einheitlich gebildet ist.

EP 0 284 783 B1

FIG1

FIG2